# EUROPÄISCHE PATENTSCHRIFT

(11) **EP 0 406 648 B1**
(45) Veröffentlichungstag und Bekanntmachung des Hinweises auf die Patenterteilung: **11.08.1993**
(21) Anmeldenummer: 90111938.8
(22) Anmeldetag: 23.06.1990
(51) Int. Cl.: B01J 39/20, C08F 8/12

(54) **Verfahren zur Herstellung von schwachsauren Kationenaustauschharzen**
Process for the preparation of weakly acid cation-exchanger resins
Procédé pour la préparation de résines échangeuses cationiques faiblement acides

(30) Priorität: 06.07.1989 DE 3922201
(43) Veröffentlichungstag der Anmeldung: 09.01.1991
(73) Patentinhaber: BAYER AG, 51368 Leverkusen (DE)
(72) Erfinder: Heller, Harold, Dr., D-5000 Koeln 80 (DE); Werner, Friedrich, Dr., D-5064 Roesrath-Forsbach (DE); Mitschker, Alfred, Dr., D-5068 Odenthal-Holz (DE); Diehl, Herbert V., Dr., Greenboro, NC 27406 (US); Schäfer, Axel, Dr., Nova, Ignazu (BR)

(56) Entgegenhaltungen:
- EP-A- 0 067 362
- DE-A- 931 733
- US-A- 3 021 301

## Beschreibung

Die Erfindung betrifft ein neues, umweltfreundliches Verfahren zur Herstellung von schwachsauren Kationenaustauschharzen durch Hydrolyse von vernetzten Acrylnitril-Perlpolymerisaten.

Schwachsaure Kationenaustauschharze auf Basis vernetzter Polyacrylsäure und ihre Herstellung durch saure oder alkalische Hydrolyse von vernetzten Acrylnitril-Perlpolymerisaten sind bekannt (siehe z.B. Ullmanns Enzyklopädie der technischen Chemie 4. Aufl. Bd. 13 S. 301; US-PS 2 885 371, DD-PS 79 584; DE-PS 1 595 700).

Die Herstellung der schwachsauren Kationenaustauschharze durch saure Hydrolyse hat den Nachteil, daß die mit starker Wärmeentwicklung verlaufende Verseifung bei Ansätzen in technischem Maßstab schwer beherrschbar ist und daß bei der Hydrolyse große Mengen an Ammoniumsulfat-haltiger Abfall-Schwefelsäure anfallen. Diese salzhaltigen Schwefelsäuren müssen aufgearbeitet werden; die Aufarbeitung ist mit einem erheblichen technischen Aufwand verbunden. Wegen dieser Nachteile hat sich die saure Hydrolyse in der Praxis nicht durchsetzen können.

Die alkalische Hydrolyse hat gegenüber der sauren Hydrolyse den Vorteil, daß das bei der Hydrolyse entstehende Ammoniak zurückgewonnen werden kann und nicht als umweltbelastendes Ammoniumsulfat anfällt. Die alkalische Hydrolyse wird mit wäßriger, alkoholischer oder wäßrig-alkoholischer 5 bis 45 %iger Alkalilauge vorgenommen und allgemein in der Weise ausgeführt, daß die Suspension des zu hydrolysierenden vernetzten Polyacrylnitril-Perlpolymerisates (in gequollenem oder ungequollenem Zustand) im alkalischen Verseifungsagens unter Rühren entweder unter Rückfluß oder aber in geschlossenen Reaktionsgefäßen (Autoklaven) auf Temperaturen von 60 bis 170° C erhitzt und bis zur Beendigung der Verseifung bei dieser Temperatur gerührt wird. Diese alkalische Hydrolyse ist aber mit ähnlichen sicherheitstechnischen Risiken verbunden, wie die saure Hydrolyse. Auch die alkalische Hydrolyse verläuft unter starker Wärmeentwicklung und das Ammoniak wird nicht gleichmäßig sondern stoßartig freigesetzt.

Es bestand daher die Aufgabe, ein wirtschaftliches Verfahren zur alkalischen Hydrolyse von vernetzten Polyacrylnitril-Perlpolymerisaten aufzufinden, das sicherheitstechnisch unbedenklich und umweltfreundlich ist und das außerdem schwachsaure Kationenaustauschharze liefert, die eine hohe mechanische und osmotische Beständigkeit, eine hohe Reinheit und eine hohe nutzbare Kapazität aufweisen.

Überraschenderweise wurde gefunden, daß man zu einem solchen Verfahren gelangt, wenn man zu hydrolysierendes Acrylnitril-Perlpolymerisat und alkalisches Verseifungsagens nicht wie bislang vor Beginn der Verseifung miteinander vermischt und anschließend dieses Gemisch, die Suspension des Perlpolymerisates im alkalischen Verseifungsagens, auf die gewünschte Verseifungstemperatur erhitzt, sondern wenn man die beiden Reaktionspartner erst bei der Verseifungstemperatur nach Maßgabe der Wärme- und Ammoniakentwicklung miteinander vereinigt, z.B. indem man den einen Reaktionspartner, alkalisches Verseifungsagens oder Perlpolymerisat vorlegt, auf die gewünschte Verseifungstemperatur erhitzt und dann den zweiten Reaktionspartner unter Rühren einträgt oder indem man beide Reaktionspartner simultan in ein auf die gewünschte Verseifungstemperatur erhitztes Reaktionsgefäß dosiert.

Überraschenderweise wurde gefunden, daß beim Zusammengeben der Reaktionspartner bei erhöhter Temperatur die Verseifung der Nitrilgruppen zu den Carboxylgruppen spontan einsetzt und nicht an die Gegenwart bestimmter Überschüsse des Verseifungsagens gebunden ist und daß die Umsetzungsgeschwindigkeit und damit auch die Ammoniak- und Wärmeentwicklung durch die Geschwindigkeit steuerbar ist, mit der beide Reaktionspartner vereinigt werden. Es wurde gefunden, daß sich durch die erfindungsgemäße Vereinigung der Reaktionspartner bei erhöhter Temperatur Verseifungsgeschwindigkeit und damit Ammoniak- und Wärmeentwicklung beliebig einstellen lassen und damit die Verseifung auch in technischem Maßstab ohne sicherheitstechnisches Risiko durchführbar wird.

Die Erfindung betrifft daher ein Verfahren zur Herstellung von schwachsauren, d.h. Carboxylgruppen-aufweisenden Kationenaustauschharzen durch Verseifung von vernetzten Acrylnitril-Perlpolymerisaten mit einem alkalischen Verseifungsagens bei bei einer Temperatur von 105-200°C, das dadurch gekennzeichnet ist, daß man Perlpolymerisat und alkalisches Verseifungsagens erst bei bei einer Temperatur von 105-200°C zusammengibt.

Das erfindungsgemäße Verfahren hat außer dem vorstehend beschriebenen Vorteil der sicheren Reaktionsführung den Vorteil, daß die erhaltenen schwachsauren Kationenaustauschharze nicht nur eine ausgezeichnete mechanische und osmotische Beständigkeit und eine hohe nutzbare Kapazität aufweisen, sondern daß sie - im Gegensatz zu den nach den bekannten Verfahren der alkalischen Verseifung erhaltenen schwachsauren Kationenaustauschharzen - praktisch frei von niedermolekularen organischen Verbindungen sind (nicht umgesetzte Monomere und in den Monomeren enthaltene, nichtpolymerisierbare Verbindungen), d.h. sehr rein sind, so daß sich eine gesonderte Reinigung der nach der Hydrolyse vorliegenden schwachsauren Kationenaustauscher erübrigt.

Das erfindungsgemäße Verfahren, d.h. die Vereinigung der Reaktionspartner bei der vorgesehenen Reaktionstemperatur kann auf verschiedene Weise vorgenommen werden;

### Ausführungsweise 1:

Die in einem Reaktionsbehälter befindliche, auf die gewünschte Hydrolysetemperatur erwärmte Suspension des zu verseifenden Perlpolymerisates in Wasser wird kontinuierlich und unter Rühren mit dem alkalischen Verseifungsagens versetzt;

### Ausführungsweise 2:

In das in einem Reaktionsbehälter befindliche, auf die gewünschte Hydrolysetemperatur erwärmte alkalische Verseifungsagens wird das zu verseifende Perlpolymerisat unter Rühren eingetragen (zudosiert);

### Ausführungsweise 3:

Das zu verseifende Perlpolymerisat und das alkalische Verseifungsagens werden gleichzeitig kontinuierlich unter Rühren in einen auf die gewünschte Hydrolysetemperatur erwärmten Reaktionsbehalter bzw. in diesem Reaktionsbehälter vorgelegtes, auf die gewünschte Reaktionstemperatur erwärmtes Wasser dosiert.

Verfahrenstechnisch und apparativ besonders einfach ist die Verfahrensvariante 1. Überraschend wurde gefunden, daß bei dieser Verfahrensvariante die Wärmeentwicklung bereits nach Zugabe von 25 bis 50 Mol-% der berechneten Menge an Verseifungsagens (bezogen auf die Menge an zu verseifenden Nitrilgruppen) praktisch zum Erliegen kommt und anschließend Wärme zugeführt werden muß, um die gewünschte Reaktionstemperatur aufrechtzuerhalten. Dadurch wird es möglich, die restliche Menge des Verseifungsagens mit erhöhter Geschwindigkeit zuzugeben. Diese beschleunigte Zugabe führt zu einer wesentlichen Erhöhung der Raum/Zeit-Ausbeute. Die Verfahrensvariante 1 ist deshalb bevorzugt.

Das bei der Hydrolyse, d.h. während des Zusammengebens der Reaktionskomponenten entstehende Ammoniak wird, gegebenenfalls unter Herabsetzung des Druckes, zusammen mit Wasser abdestilliert und durch geeignete Vorrichtungen, z.B. Wäscher, als konzentrierte Ammoniaklösung gewonnen. Das Abdestillieren des Ammoniaks wird nach dem Zusammengeben der Reaktionskomponenten solange fortgesetzt, bis kein Ammoniak mehr übergeht.

Als alkalisches Verseifungsagens können beliebige wäßrige, alkoholische oder wäßrig-alkoholische Lösungen von Alkali- und Erdalkalimetallhydroxiden eingesetzt werden; bevorzugt werden wäßrige Alkalilösungen wie Kalilauge und insbesondere Natronlauge verwendet.

Um in möglichst kurzer Zeit eine möglichst vollständige Umsetzung der Nitrilgruppen zu erreichen, wird die Alkalimenge vorzugsweise so gewählt, daß die Alkalikonzentration nach beendetem Zusammengeben der beiden Reaktionspartner in der wäßrigen Phase 5 bis 40 Gew.-%, bevorzugt 10 bis 30 Gew.-%, und der Alkaliüberschuß, bezogen auf die Menge an zu verseifenden Nitrilgruppen, 10 bis 300 Mol.-%, bevorzugt 100 bis 250 Mol.-% beträgt.

Um eine möglichst vollständige Umsetzung der Nitrilgruppen in möglichst kurzer Zeit zu erreichen, ist es vorteilhaft, im Temperaturbereich von 110 bis 170°C, gegebenenfalls unter erhöhtem Druck zu arbeiten.

Besonders bewährt hat sich im erfindungsgemäßen Verfahren als alkalisches Verseifungsagens wäßrige 15 bis 25 gew.-%ige Natronlauge zu verwenden und die Verseifung bei Temperaturen von 125 bis 160°C vorzunehmen. Unter diesen Verseifungsbedingungen wird bei Verwendung von mit bis zu 10 Gew.-% Polyvinylverbindungen vernetzten Acrylnitril-Perlpolymerisaten bereits innerhalb von 4 bis 5 Stunden ein 90 bis 95 %iger Umsatz der Nitrilgruppen (Verseifungsgrad) erreicht.

Bei den erfindungsgemäß zu verseifenden vernetzten Acrylnitril-Perlpolymerisaten handelt es sich um Mischpolymerisate aus Acrylnitril und als Vernetzern dienenden Polyvinylverbindungen wie Divinylbenzol, aliphatischen oder cycloaliphatischen Polyallylverbindungen wie 2,5-Dimethyl-hexadien-(1,5), 1,2,4-Trivinylcyclohexan und Trivinylbenzol. Die Mischpolymerisate können außer Acrylnitrileinheiten und Vernetzern auch noch andere Monovinylverbindungen wie (Meth)Acrylsäureester, Styrol und Vinylacetat enthalten Die Mischpolymerisate können gelförmig sein oder eine makroporöse Struktur besitzen. Das erfindungsgemäße Verfahren eignet sich auch für die Herstellung schwachsaurer Kationenaustauschharze auf Basis von Methacrylnitril, Chloracrylnitril, Vinylidencyanid oder Crotonnitril.

### Beispiel

In einem mit Heizmantel, Rührer, Thermometer und Druckregelventil ausgerüsteten 50 l-V4A-Rührbehälter wird eine Suspension von 10 l Mischpolymerisat (erhalten durch Perlpolymerisation einer Mischung von Acrylnitril mit 7,5 Gew.-% 61 %igem Divinylbenzol und 2 Gew.-% Octadien-1,7) in 16 l entsalztem Wasser unter Rühren auf 150°C erwärmt. Nach Erreichen der Temperatur werden bei einem Innendruck von 4,8 bis 5 bar 4,0 kg 45 gew.-%ige Natronlauge (= 49 Mol-% bezogen auf eingesetzte Nitrilgruppen) innerhalb von 100 Minuten in den Behälter gepumpt, wobei zur Konstanthaltung der Innentemperatur auf 148 bis 152°C während der ersten 90 Minuten ein leichtes Kühlen erforderlich ist. Anschließend werden die restlichen 13,5 kg 45 gew.-%ige Natronlauge (= 166 Mol-% bezogen auf eingesetzte Nitrilgruppen) innerhalb von 40 Minuten eingepumpt, wobei zur Aufrechterhaltung der Innentemperatur von 150°C leicht geheizt werden muß. Gleichzeitig beginnt verstärkt Ammoniak abzudestillieren. Nach beendeter Natronlaugezugabe wird die Ammoniakdestillation noch etwa 3,5 Stunden bei 148 bis 152°C fortgesetzt. Dabei wird der Innendruck des Behälters langsam von 5 auf 2,5 bar gesenkt.

Das abdestillierende Ammoniak wird in einem Wäscher absorbiert und als 25 gew.-%ige wäßrige Lösung aufgefangen. Der Kolonnenablauf wird in den Rührbehälter zurückgepumpt.

Nach beendeter Ammoniakdestillation und Abkühlen wird der gesamte Behälterinhalt in einen Spülturm überführt; man läßt die Reaktionslösung ablaufen und spült den Kationenaustauscher mit entsalztem Wasser. Zur Überführung des in der Natriumsalzform anfallenden Kationenaustauschers in die H-Form wird dieser mit 10 %iger Schwefelsäure regeneriert und anschließend bis zum neutralen Ablauf mit Wasser gewaschen.

Es werden 26,9 l schwachsaures Kationenaustauschharz (Na^{⊕}-Form) = 18,9 l schwachsaures Kationenaustauschharz (H^{⊕}-Form) erhalten. Seine Totalkapazität beträgt 4,58 Äquivalente/l (H^{⊕}-Form). Der Umsetzungsgrad der Nitrilgruppen beträgt 94,6 Mol-%; die Prüfung der osmotisch-mechanischen Stabilität ergab 99 % ganze Kugeln nach 150 Beladungswechseln unter 2,5 bar. Bei der Reinheitsprüfung, für die 1.500 ml des erhaltenen Kationenaustauschers in der Na^{⊕}-Form in 1.000 ml entsalztem Wasser suspendiert und einer Wasserdampfdestillation unterworfen wurden, so daß pro Stunde 200 ml Wasserdampfkondensat anfielen (Versuchsdauer 5 Stunden), konnten in keiner Fraktion organische Verbindungen, speziell Naphthalin, nachgewiesen werden (Nachweisgrenze des Testes für Naphthalin: 1 mg/l).

Außerdem wurden 5,85 kg 25 %iger wäßriger Ammoniaklösung erhalten.

Schwachsaure Kationenaustauscher gleicher Qualität werden in gleicher Menge ebenfalls erhalten, wenn man Perlpolymerisat und Natronlauge wie folgt bei erhöhter Temperatur zusammengibt:
a) Im Rührbehälter 17,5 kg 45 gew.-%ige Natronlauge auf 150°C erwärmt und anschließend in diese bei gleicher Temperatur kontinuierlich im Lauf von 4 Stunden mittels Dosierschnecke die in einem zweiten Rührbehälter befindliche Suspension von 10 Liter des beschriebenen Perlpolymerisats in 16 Litern entsalztem Wasser einträgt;
b) Im Rührbehälter 10 Liter entsalztes Wasser auf 150°C erwärmt und anschließend in dieses bei Temperaturen von 148 bis 150°C gleichzeitig und kontinuierlich innerhalb 4 Stunden aus getrennten Behältern 17,5 kg 45 gew.-%ige Natronlauge (mittels Dosierpumpe) und die Suspension von 10 Litern des beschriebenen Perlpolymerisates in 6 Litern entsalztem Wasser (mittels Dosierschnecke) einträgt.

Abdestillieren des Ammoniaks und Aufarbeitung der Hydrolysegemische erfolgt in beiden Fällen wie vorstehend beschrieben.

## Patentansprüche

1. Verfahren zur Herstellung von schwachsauren Kationenaustauscherharzen durch Verseifung von vernetzten Acrylnitril-Perlpolymerisaten mit einem alkalischen Verseifungsagens bei einer Temperatur von 105-200°C, dadurch gekennzeichnet, daß man Perlpolymerisat und alkalisches Verseifungsagens erst bei einer Temperatur von 105-200°C zusammengibt.

2. Verfahren nach Anspruch 1, dadurch gekennzeichnet, daß man als alkalisches Verseifungsagens wäßrige Alkalilösungen verwendet.

3. Verfahren nach Anspruch 1 oder 2, dadurch gekennzeichnet, daß man das bei der Hydrolyse gebildete Ammoniak zusammen mit Wasser fortlaufend abdestilliert.

4. Verfahren nach einem der Ansprüche 1, 2 oder 3, dadurch gekennzeichnet, daß man Perlpolymerisat und alkalisches Verseifungseagens bei Temperaturen von 110 bis 170°C zusammengibt.

5. Verfahren nach einem der Ansprüche 1, 2, 3 oder 4, dadurch gekennzeichnet, daß man Perlpolymerisat und alkalisches Hydrolyseagenz bei erhöhter Temperatur in der Weise zusammengibt, daß man die in einem Reaktionsbehälter befindliche, auf die gewünschte Hydrolysetemperatur erwärmte Suspension des zu verseifenden Perlpolymerisates in Wasser kontinuierlich unter Rühren mit dem alkalischen Verseifungsagens versetzt.

6. Verfahren nach einem der Ansprüche 1, 2, 3, 4 oder 5, dadurch gekennzeichnet, daß man als Hydrolyseagenz 15 bis 25 gew.-%ige wäßrige Natronlauge verwendet und die Reaktionspartner bei Temperaturen von 125 bis 160°C zusammengibt.

## Claims

1. Process for the preparation of weakly acid cation exchange resins by hydrolysis of crosslinked acrylonitrile bead polymers with an alkaline hydrolysing agent at a temperature of 105-200°C, characterised in that the bead polymer and alkaline hydrolysing agent are first brought together at a temperature of 105-200°C.

2. Process according to Claim 1, characterised in that aqueous alkali solutions are used as the alkaline hydrolysing agent.

3. Process according to Claim 1 or 2, characterised in that the ammonia formed during the hydrolysis is continuously distilled off together with water.

4. Process according to one of Claims 1, 2 or 3, characterised in that the bead polymer and alkaline hydrolysing agent are brought together at temperatures of 110 to 170°C.

5. Process according to one of Claims 1, 2, 3 or 4, characterised in that the bead polymer and alkaline hydrolysing agent are brought together at elevated temperature in a manner such that the alkaline hydrolysing agent is added continuously, while stirring, to the aqueous suspension, which is contained in a reaction container and has been heated to the desired hydrolysis temperature, of the bead polymer to be hydrolysed.

6. Process according to one of Claims 1, 2, 3, 4 or 5, characterised in that 15 to 25% strength by weight aqueous sodium hydroxide solution is used as the hydrolysing agent and the reaction partners are brought together at temperatures of 125 to 160°C.

## Revendications

1. Procédé de préparation de résines échangeuses de cations faiblement acides par saponification de polymères en perles d'acrylonitrile réticulés avec un agent de saponification alcalin à une température de 105-200°C, caractérisé en ce qu'on ne mélange le polymère en perles et l'agent de saponification alcalin qu'à une température de 105-200°C.

2. Procédé selon la revendication 1, caractérisé en ce qu'on utilise des solutions aqueuses alcalines comme agent de saponification alcalin.

3. Procédé selon la revendication 1 ou 2, caractérisé en ce qu'on distille en continu, en même temps que de l'eau, l'ammoniac formé lors de l'hydrolyse.

4. Procédé selon l'une des revendications 1, 2 ou 3, caractérisé en ce qu'on mélange le polymère en perles et l'agent de saponification alcalin à des températures de 110 à 170°C.

5. Procédé selon l'une des revendications 1, 2, 3 ou 4, caractérisé en ce qu'on mélange le polymère en perles et l'agent d'hydrolyse alcalin à une température élevée en ajoutant de façon continue, sous agitation, l'agent de saponification alcalin à la suspension dans l'eau du polymère en perles à saponifier qui se trouve dans un réacteur et qui est chauffée à la température d'hydrolyse désirée.

6. Procédé selon l'une des revendications 1, 2, 3, 4 ou 5, caractérisé en ce qu'on utilise comme agent d'hydrolyse une lessive aqueuse de soude à 15 à 25 % en poids et en ce qu'on mélange les partenaires réactionnels à des températures de 125 à 160°C.
